(19) Europäisches Patentamt
European Patent Office
Office européen des brevets

(11) **EP 4 700 697 A1**

(12) **EUROPEAN PATENT APPLICATION**

(43) Date of publication:
**25.02.2026 Bulletin 2026/09**

(51) International Patent Classification (IPC):
***G06T 7/00*** (2017.01)

(21) Application number: **25195242.0**

(22) Date of filing: **11.08.2025**

(52) Cooperative Patent Classification (CPC):
**G06T 7/0008;** G06T 2207/10116;
G06T 2207/30128; G06T 2207/30168

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.08.2024 JP 2024138441**

(71) Applicant: **Anritsu Corporation
Atsugi-shi
Kanagawa 243-8555 (JP)**

(72) Inventors:
• **YAMAZAKI, Takeshi
Kanagawa, 243-8555 (JP)**
• **CARANDANG, Lawrence, Earl
Kanagawa, 243-8555 (JP)**

(74) Representative: **Novagraaf International SA
Chemin de l'Echo 3
1213 Onex, Geneva (CH)**

(54) **ARTICLE INSPECTION APPARATUS**

(57) The article inspection apparatus includes an image processing unit (33) that performs an image process with respect to an imaging data (Dpx) of an article (P) and outputs determination data, a determination unit (34) that determines a quality state of the article (P) based on the determination data, an operation check image generation unit (53) that generates an image including an NG feature image (Cn) in which the quality state is determined to be defective as an operation check image (Dpc) used in an operation check processing unit (54) based on an inspection image during a driving operation, and an operation check processing unit (54) that executes an operation check process using the predetermined image processing algorithm in parallel with an operation of the image processing unit (33) during the driving operation, and determines whether the operations of the image processing unit (33) and the determination unit (34) are normal.

FIG. 1

EP 4 700 697 A1

**Description**

[Technical Field]

The present invention relates to an article inspection apparatus, and more particularly to an article inspection apparatus that inspects a quality state of an inspection article by applying a predetermined image processing algorithm to an inspection image obtained by imaging a predetermined article type of the inspection article.

[Background Art]

In the related art, in the article inspection apparatuses, an image processing algorithm having a predetermined image processing filter corresponding to an inspection item or a combination thereof is applied to imaging data of the inspection article, so that a predetermined quality state of the inspection article can be inspected with high accuracy.

In such an article inspection apparatus, it is necessary to select and set an image processing filter or the like corresponding to an inspection item of a specific inspection article from among a plurality of image processing filters or the like created based on the features of the inspection article and the features of the foreign matter to be detected and stored in advance in the memory. Therefore, there are some systems that automate the function of selecting and setting the image processing filter or the like necessary for inspection so that such a selection and setting work can be easily performed regardless of the operator's experience.

As this type of article inspection apparatus, for example, an apparatus is known which includes a detection unit that outputs a signal in response to a transported article, a foreign matter determination unit that determines the presence or absence of foreign matter in the transported article based on the signal from the detection unit, an operation check processing unit that determines whether or not the operation of the detection unit is normal by using a foreign matter sample, and a display unit that displays a determination result of the foreign matter determination unit and a determination result of the operation check processing unit, respectively, and in which the operation check processing unit determines whether or not the operation of the detection unit is normal by determining whether or not an amplitude and a phase of an output signal of the detection unit are within an allowable range in a case where a foreign matter sample designated for each article type is subjected to test transport (for example, see Patent Document 1).

In addition, as another article inspection apparatus, an apparatus is known which includes an inspection unit that inspects a transported article, first and second passage detection sensors that detect arrival of an inspection object to be brought into the inspection unit at different positions in transport directions, and a control unit that is capable of switching the inspection unit between a normal inspection mode and an operation check mode, in which the control unit executes automatic mode switching from the normal inspection mode to the operation check mode in a case where the second passage detection sensor on a relatively upstream side does not detect passage of the inspection object and the first passage detection sensor on a relatively downstream side detects passage of the inspection object, and returns to the normal inspection mode in a case where a detection interval of the inspection object whose passage is detected by first passage detection means in the operation check mode is equal to or longer than a predetermined time (for example, Patent Document 2).

[Related art Document]

[Patent Document]

[Patent Document 1] JP-A-2009-31149
[Patent Document 2] JP-A-2013-113784

[Disclosure of the Invention]

[Problem that the Invention is to Solve]

However, in the above-described article inspection apparatuses according to the related art, the inspector has performed the operation check to check whether or not the determination process based on the detection operation or the detection signal of the article inspection apparatus is normal by a manual and physical action of flowing a sample for operation check to an inspection line having an inspection unit and a transport unit. Therefore, there is a problem that the work time of the inspector that is not converted into data is long and the operation check work is not efficient.

In addition, there is also a problem that, in a case where a mistake such as forgetting to return a sample for operation check occurs, a downtime of the production line including the inspection line occurs, and the production efficiency is lowered.

Further, since the operation check of the article inspection apparatus is performed in an inspection stop state such as an operation check mode or a maintenance mode other than the driving operation of the article inspection apparatus, it was not possible to perform an accurate operation check with respect to the variation or bias of the product quality during the driving operation of performing the article inspection.

In addition, not only in a case of switching the article type, but also in a case of periodically performing the operation check after the switching, there is a problem that the operation rate of the article inspection apparatus is decreased due to an increase in downtime (stop time), efforts to manage an inspection result data and the like, in addition to the operation check work of the inspector.

The present invention has been made in view of the above-described unresolved problems, and an object of the present invention is to provide an article inspection apparatus that can reduce downtime of transitioning to an inspection stop state for operation check and can perform the operation check in parallel during a driving operation in which article inspection is performed.

[Means for solving the problem]

(1) In order to achieve the above object, an article inspection apparatus according to the present invention includes an image processing unit that performs an image process using a predetermined image processing algorithm on an inspection image (Dpx) obtained by imaging an article to be transported by imaging means and outputs determination data for a quality state of the article; a determination unit that determines whether the quality state of the article is good or bad based on the determination data; a display unit that displays a result determined by the determination unit; an operation check image generation unit that generates a defective article image including a defective feature portion of which the quality state of the article is determined to be defective as an operation check image based on the inspection image during a driving operation in which the image processing unit, the determination unit, and the display unit are operated; and an operation check processing unit (54) that executes an operation check process using the predetermined image processing algorithm on the operation check image in parallel with an operation of the image processing unit during the driving operation, and determines whether or not the operations of the image processing unit and the determination unit are normal.

With this configuration, the operation check process is executed in parallel with the operation of the image processing unit during the driving operation, and whether or not the operations of the image processing unit and the determination unit are normal is determined by the operation check processing unit based on the inspection image during the driving operation. In this case, as the operation check image used in the operation check processing unit, the defective article image including the defective feature portion of which the quality state of the article is determined to be defective is generated by the operation check image generation unit. Therefore, during the driving operation, it is checked whether or not the operation check image is determined to be defective by using the operation check image of the defective article image generated to include the defective feature portion based on the inspection image of the inspection article that is exclusively a good article, and thus it is possible to determine whether or not the operations of the image processing unit and the determination unit are normal. As a result, the article inspection apparatus can perform the operation check such as whether or not the detection signal from the detection unit is appropriate during the driving operation without transitioning to the inspection stop state such as the operation check mode.

Since the operation check processing unit uses a predetermined image processing algorithm as in the determination unit, it is possible to perform effective operation check by the operation check process of setting an inspection image of an article determined as a good article by the determination unit as an inspection image of a good article and using an operation check image of the defective article image in which an image of the defective feature portion. However, the operation check processing unit may use the predetermined image processing algorithm as in the determination unit, and may execute, in parallel, the determination of whether or not an inspection image of an article which is determined as a good article by the determination unit is determined as a good article and the determination of whether or not the operation check image of the defective article image is determined to be defective during the driving operation.

(2) In the article inspection apparatus according to the aspect of the present invention, the operation check image generation unit may generate the operation check image by synthesizing a plurality of partial images that are the defective feature portions with a plurality of locations having different image features in the inspection image during the driving operation.

With this configuration, the operation check image is obtained by synthesizing the plurality of partial images as the defective feature portions at a plurality of locations having different image features in the inspection image, respectively, thereby less likely to be affected by variation or bias in the quality state of the inspection article.

(3) The operation check image generation unit may generate the defective article image by synthesizing images of the plurality of defective feature portions in which the quality state of the article is determined to be defective with respect to a good article inspection image in which the quality state of the article is determined to be a good article by the determination unit during the driving operation.

With this configuration, the operation check image of the defective article image in which the defective feature portion is synthesized based on the good article inspection image is generated during a normal driving operation, and the defective feature of the operation check image is stably secured, so that stable operation check can be performed.

(4) The article inspection apparatus according to the present invention may further include a control unit (30) that has a first control function unit which controls operations of the image processing unit, the determination unit, and the display unit to determine whether a quality state of each article is good or bad, in which the control unit may have a second control function unit (50) that controls the operations of the operation check processing unit and the operation check image generation unit to determine whether the operations of the image processing unit and the determination unit are normal while the first control function is exhibited.

With this configuration, during the driving operation, the control unit can execute the operation check process of controlling the operations of the image processing unit in parallel with the determination unit to determine whether or not the quality state of the article is good using the first control function unit and the operation check process of controlling the operation check image generation unit and the operation check processing unit to determine whether or not the operations of the image processing unit and the determination unit in charge of the inspection are normal using the second control function unit. Here, the operation check process can be a process on a background hidden from a display screen during the driving operation, but in this case, in a case where the operation check result is abnormal, it is possible to perform notification output such as warning display or warning sound.

(5) In the article inspection apparatus according to the embodiment of the present invention, the inspection image may be an X-ray transmission image (Dpx) obtained by imaging the article with X-rays.

With this configuration, as in the X-ray inspection image based on the imaging data of each article, as the operation check image used in the operation check processing unit during the driving operation, the operation check image of the defective article image can be easily created by performing image synthesis on the defective feature portion of which the quality state of the article is determined to be defective with respect to the X-ray transmission image based on the imaging data of each article.

[Advantage of the Invention]

According to the present invention, it is possible to provide an article inspection apparatus that can perform operation check such as whether or not a detection signal from a detection unit is appropriate during a driving operation without transitioning to an inspection stop state such as an operation check mode.

[Brief Description of the Drawings]

[Fig. 1] Fig. 1 is a schematic configuration diagram of an article inspection apparatus according to an embodiment of the present invention.
[Fig. 2] Fig. 2 is an explanatory diagram of an example of an operation check image in the article inspection apparatus according to the embodiment of the present invention.
[Fig. 3] Fig. 3 is a flowchart illustrating an outline processing procedure of an operation check processing program executed during a driving operation of the article inspection apparatus according to the embodiment of the present invention.
[Fig. 4] Fig. 4 is a schematic configuration diagram of an article inspection apparatus according to another embodiment of the present invention.

[Best Mode for Carrying Out the Invention]

Hereinafter, embodiments according to the present invention will be described with reference to the drawings.

(One Embodiment)

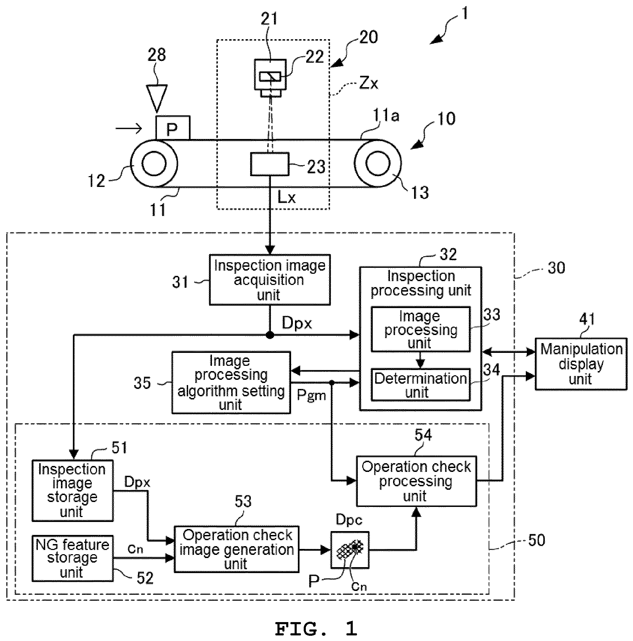

Figs. 1 to 3 illustrate an article inspection apparatus according to an embodiment of the present invention.

First, a configuration thereof will be described.

As illustrated in Fig. 1, the article inspection apparatus 1 of the present embodiment includes a transport unit 10, an inspection unit 20, and a control unit 30, and irradiates an inspection article P (hereinafter, also simply referred to as an article P) transported by the transport unit 10 with X-rays by the inspection unit 20, detects image data corresponding to a transmitted X-ray dose distribution, and inspects a quality state of the article P based on the detected image data. The quality state mentioned herein is appropriateness of a quality or a physical quantity required for the article P as a product, for example, the presence or absence of a foreign matter, the presence or absence of a missing product, the presence or absence of a defect in a shape, a size, and a packaging state of content, and a distribution of a density, a thickness, a volume, or a mass.

The transport unit 10 is a conveyor capable of sequentially transporting the article P in a right direction in Fig. 1, by winding a loop-shaped transport belt 11 around a plurality of transport rollers 12 and 13 and using an upper running section 11a of the transport belt 11, and is supported by a housing (not illustrated).

The inspection unit 20 is an X-ray inspection unit including an X-ray generator 21 (X-ray source) that generates X-rays in a predetermined energy band, which are transmitted through the article P transported by the transport unit 10, and an X-ray detector 23 disposed directly below the upper running section 11a of the transport belt 11.

The X-ray generator 21 generates X-rays having a wavelength and an intensity corresponding to a tube current and a tube voltage of a known X-ray tube 22, and can irradiate the article P in a predetermined inspection section Zx on the transport belt 11 with fan beam-shaped X-rays that pass through an X-ray window portion of an enclosure (not illustrated in detail) and spread in a direction orthogonal to an article transport direction of the transport unit 10.

Although not illustrated in detail, the X-ray detector 23 is configured with an X-ray line sensor camera in which detection elements consisting of a scintillator, which is, for example, a phosphor, and a photodiode or a charge coupling element are arranged in an array shape at predetermined pitches in a widthwise direction of a transport path of the transport unit 10 and X-ray detection is performed at a predetermined resolution, and the X-ray detector 23 is disposed at a predetermined position in a transport direction corresponding to an X-ray irradiation position from the X-ray generator 21.

That is, the X-ray detector 23 can detect X-rays which are emitted from the X-ray generator 21 and transmitted through the article P for each predetermined transmission region corresponding to the detection element, convert the X-rays into an electric signal according to the amount of transmission of the X-rays, and output an X-ray detection signal for generating an X-ray transmission image in which a direction of transmission of the X-rays is an observation direction.

In addition, the X-ray detector 23 executes scanning in the width direction according to the transport speed of the transport belt 11 and sequentially outputs the X-ray detection signal. In a case where the fact that the article P is put on the transport belt 11 to be transported toward the predetermined inspection section Zx is detected by the article detection sensor 28, the X-ray detection signal of the article P detected after a predetermined time elapses is output.

The control unit 30 is inspection control means for controlling the X-ray irradiation intensity and the irradiation period in the inspection unit 20 or controls the X-ray detection cycle in the X-ray line sensor of the X-ray detector 23 according to the transport speed of the article P, the detection period of each article P, and the like, and is transport control means for controlling the transport speed of the article P by the transport belt 11 and the transport interval in the transport unit 10, but the detailed illustration of the transport control means is omitted.

The control unit 30 is configured to include, for example, a microcomputer (processor) having a CPU, a ROM, a RAM, and an I/O interface, which are not illustrated, a program device that stores a control program for exhibiting each function of a plurality of functional units to be described later in a readable manner in the ROM, an auxiliary storage device, or other recording media or that downloads the control program from another computer by data communication, a timer circuit, and the like. The CPU executes predetermined arithmetic processing while exchanging data with the RAM or the like and executes the control program of the plurality of functional units in accordance with the control program stored in the ROM or the like.

Specifically, the control unit 30 has, as the plurality of functional units, an inspection image acquisition unit 31 that sequentially takes in the detection data Lx from the X-ray detector 23 for each predetermined period, and acquires and outputs data Dpx (hereinafter, also referred to as imaging data Dpx) of an X-ray imaging image corresponding to the dose distribution of the X-rays transmitted through the article P, an inspection processing unit 32 that executes a predetermined inspection based on the imaging data Dpx, and an image processing algorithm setting unit 35 that variably sets an image processing algorithm used in the inspection processing unit 32 according to the selected article type of the article P.

The imaging data Dpx of each article P output from the inspection image acquisition unit 31 is described here as having a certain radiation quality (energy, wavelength) specified according to the quality of the article P, but may be output as a so-called dual-energy or multi-energy X-ray image in which the radiation qualities of the X-rays are a plurality of types of X-rays different from each other.

The inspection processing unit 32 includes an image processing unit 33 takes in the imaging data Dpx output from the inspection image acquisition unit 31 and executes an image analysis process such as one or more predetermined filter processes in which a parameter or a limit for extracting an image feature is set and feature measurement for obtaining a feature amount of the extracted image feature, and a determination unit 34 that executes a determination process of determining presence or absence of a predetermined quality state of the article P, for example, a determination process of presence or absence of foreign matter, presence or absence of missing items, appropriateness of a shape, a size, or a packaging state of content, based on data of the feature amount extracted and measured by the image processing unit 33.

The image processing algorithm setting unit 35 is connected to the inspection processing unit 32 in a data communicable manner, and is able to update or change at least the image processing algorithm (which may include the determination processing algorithm used in the determination unit 34) used in the image processing unit 33. In addition, the inspection processing unit 32 displays and outputs the determination result of the determination unit 34 on the manipulation display unit 41 (display), and, in a case where there is a manipulation input for requesting selection or switching of the article type from the manipulation display unit 41, the inspection processing unit 32 can request the image processing algorithm setting unit 35 to download and/or set the specific image processing algorithm Pgm corresponding to the requested article type from the manipulation display unit 41.

More specifically, the inspection image acquisition unit 31 is an image input unit, and for example, performs A/D conversion on the X-ray detection signals from the plurality of detection elements of the X-ray detector 23, and outputs data of the cumulative transmission amount in the unit time (hereinafter, referred to as line scanning) for all the detection element regions of n detection elements (n is an integer greater than 1, for example, 640) for each predetermined unit transport time corresponding to the detection element size in the X-ray detector 23, as digital data of the density level representing gradation from 0 to 1023.

In addition, the inspection image acquisition unit 31 has a data processing program and a work memory (not illustrated) that exhibit a function of generating the imaging data Dpx of the article P based on the detection data Lx of the line-scanned image sequentially written in the image memory and outputting the imaging data Dpx to the image processing unit 33 and the inspection image storage unit 51 in a case where the line scanning by the X-ray detector 23 is repeated a predetermined number of times according to the inspection period of the article P.

In the image processing unit 33 of the inspection processing unit 32, a predetermined image processing algorithm in which an image processing filter and the like are combined is set and stored in a state in which the image processing algorithm is updatable and switchable, in order to execute a predetermined article inspection based on the imaging data Dpx of the article P taken in from the inspection image acquisition unit 31.

The image processing filter included in the image processing algorithm of the image processing unit 33 is a processing program for extracting image features (for example, an edge, a line, an angle, a region, a shade, or a texture) necessary for the predetermined article inspection based on the imaging data Dpx of the article P, and in a case where the image processing algorithm includes a filter for foreign matter detection, the image processing filter is a feature extraction filter that performs edge detection processing for emphasizing a contour of the foreign matter in the article P, for example, a differentiation filter such as a Sobel filter, and performs differentiation processing or the like based on a predetermined arithmetic expression on a region near the interest pixel to emphasize the edge of the foreign matter. The image processing filter or the like includes preprocessing such as shading correction or noise removal for the imaging data from the inspection image acquisition unit 31 for improving the detection processing accuracy of the image feature.

In addition, the feature measurement of the image feature executed by the image processing unit 33 is a process of calculating a feature amount required for the determination process in the determination unit 34 by executing calculation of an attribute (feature amount for characterizing an edge, a region, a distance, a position, a shape, and the like) related to, for example, a shade feature, a color feature, a shape feature, and the like, the calculation of a feature amount representing a spatial relationship between such features, or calculation of a texture feature amount related to a spatial frequency distribution and a direction component, for an image obtained by performing a necessary pre-process or an image process on the imaging data Dpx of the article P taken in from the inspection image acquisition unit 31.

The determination unit 34 executes a determination process of determining whether or not the local feature shape or the like corresponding to the foreign matter or the defective portion satisfying the defective determination condition is included in the article P by detecting the feature shape, the foreign matter, or the like detected in the article P or comparing the feature amount such as the area, the contour length, and the density sum of the detection target with the limit which is a predetermined determination reference value, based on the feature amount extracted by the image processing unit 33 for the feature measurement.

As described above, the inspection processing unit 32 applies a predetermined image processing algorithm obtained by synthesizing a plurality of types of filter processing or the like to the imaging data Dpx of the predetermined article type of article P and the X-ray inspection image data obtained by executing the necessary preprocess or image process to the imaging data Dpx, and thus determines and inspects a predetermined quality state of the article P from the image.

The image processing algorithm setting unit 35 stores in advance a plurality of image processing algorithms for image determination (which may further include a determination processing algorithm that can be executable in the determination unit 34) that can be executable at least in the image processing unit 33. In a case where the switching/updating to the other article type is requested from the inspection processing unit 32 based on the selection or switching manipulation of the article type from the manipulation display unit 41, the image processing algorithm setting unit 35 has a function of updating the image processing algorithm being used in the inspection processing unit 32 to a specific image processing algorithm Pgm corresponding to a new set article type.

The control unit 30 has both a first control function of operating as the inspection control means and the transport control means described above, and also has a second control function of checking whether or not the inspection process (that is, the image process in the image processing unit 33 and the determination process in the determination unit 34) in the inspection processing unit 32 is a normal operation during the driving operation of the article inspection apparatus 1. Here, an operation check control unit 50 that exhibits the second control function is built in the control unit 30.

The operation check control unit 50 can execute, for example, the determination process of determining whether or not the inspection process in the inspection processing unit 32 is a normal operation in real time.

The operation check control unit 50 includes an inspection image storage unit 51 that sequentially stores and holds the imaging data Dpx of each article P sequentially acquired by the inspection image acquisition unit 31 as an inspection image, an NG feature storage unit 52 that stores in advance the image data of an NG feature that characterizes that the quality state of the article P is defective, an operation check image generation unit 53 that generates image data of an operation check image Dpc including the NG features by performing digital image synthesis (hereinafter, simply referred to as synthesis) on the inspection image of each article P from the inspection image storage unit 51 and the NG features stored in the NG feature storage unit 52, and an operation check processing unit 54 that executes the same inspection process as the image process of the image processing unit 33 and the determination process of the determination unit 34 for the operation check image Dpc including the above-described NG features to check whether or not the inspection process of the inspection processing unit 32 is normal.

Here, the NG feature to be synthesized in the inspection image, which is the imaging data Dpx of each article **P,** for creating the operation check image Dpc including the NG features indicates an image feature indicating that the quality or physical quantity required for the article P as a product is not appropriate, for example, an image feature indicating a defect in which a foreign matter is present, a defect in which a product is missing, a defect in which a shape, a size, and a packaging state of content, or a defect in a distribution of a density, thickness, a volume, or a mass.

In the following description, the detection of the NG feature by the operation check processing unit 54 is referred to as "NG detection", and the non-detection of the NG feature by the operation check processing unit 54 is referred to as "NG non-detection".

In a case where the inspection processing unit 32 is switched to the specific image processing algorithm Pgm according to the set article type by the image processing algorithm setting unit 35, the operation check processing unit 54 takes in the specific image processing algorithm Pgm from the image processing algorithm setting unit 35 in parallel with the switching.

Then, during the driving operation of the article inspection apparatus 1 in which the inspection process is executed based on the imaging data Dpx of each article P is executed by the inspection processing unit 32 and the inspection result is output to the manipulation display unit 41, in parallel with the driving operation, the operation check control unit 50 can create an operation check image Dpc by the operation check image generation unit 53 using the image data of the imaging data Dpx of each article P and the predetermined NG feature image Cn and the determination process as the inspection process by the inspection processing unit 32 on the operation check image Dpc by the operation check processing unit 54.

That is, the operation check image generation unit 53 generates an operation check image Dpc of a defective article image including at least a defective feature portion (NG feature) of which the quality state of the article P is determined to be defective, as an operation check image used for the operation check process in the operation check processing unit 54, based on the imaging data Dpx of each article P which is the inspection image during the driving operation of the article inspection apparatus 1.

In addition, during the driving operation of the article inspection apparatus 1 in which the image processing unit 33, the determination unit 34, and the manipulation display unit 41 are operated, the operation check processing unit 54 executes the same image process and the determination process as the inspection process of the inspection processing unit 32 while using the image data of the operation check image Dpc in which the predetermined image processing algorithm Pgm and the imaging data Dpx of each article P are synthesized with the NG feature, so that it is possible to determine whether or not the processing result of the NG detection is reliably obtained in a case where the foreign matter having the NG feature or another abnormality occurs in each inspection image Dpx processed by the inspection processing unit 32 in parallel with the operations of the image processing unit 33 and the determination unit 34 of the inspection processing unit 32.

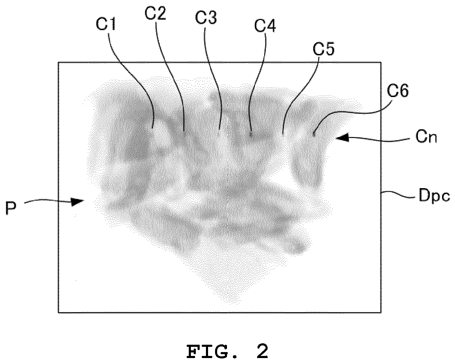

In the present embodiment, the imaging data Dpx of each article P, which is the inspection image, is an X-ray transmission image obtained by imaging the article P with X-rays. Therefore, as illustrated in Fig. 2, during the driving operation of the article inspection apparatus 1, the operation check image generation unit 53 generates the operation check image Dpc, which is an image of a pseudo defective article, by synthesizing NG feature portions C1, C2, C3, C4, C5, and C6 (partial images of the defective feature portion) which are a plurality of partial images including the NG feature with a plurality of locations having different image features in the imaging data Dpx of each article P, which is the inspection image, and, for example, by performing pixel value synthesis conversion with a predetermined arithmetic expression.

In this case, the operation check image generation unit 53 may generate the operation check image Dpc, which is an image of a pseudo defective article, by synthesizing the plurality of NG feature portions C1, C2, C3, C4, C5, and C6 in which the quality state of the article P is determined to be defective only for the good article inspection image in which the quality state of the article P is determined to be the good article determination by the determination unit 34 during the driving operation.

However, the operation check image generation unit 53 does not necessarily have to create the operation check image Dpc, which is the simulated defective article image, by synthesizing the NG feature images Cn in real time for each article P, and, for the defective article, the operation check image generation unit 53 may output the image that is determined as the defective article as the operation check image Dpc without synthesizing the NG feature image Cn with the imaging data Dpx and may execute the operation check process in the operation check processing unit 54. In this case, the positional information of the defective portion of the defective article may be stored to be used for the result of the operation check, and it is preferable that the operation check process is executed after the limit of the determination unit 34 is changed or the like. In addition, in a case where the inspection image DPx that is determined as the defective article is the image of the product with the foreign matter, the operation check processing unit 54 may create the foreign matter positional information of the image of the product with the foreign matter using the data that is output from the determination unit 34.

In addition, the operation check image generation unit 53 does not necessarily have to output the operation check image Dpc of the defective article image for all the articles P, and may sequentially create the operation check image Dpc as a simulated defective article image by synthesizing the NG feature images Cn for a predetermined number of pieces of imaging data Dpx after the article P for which the good article determination is made is continued for the predetermined number of times, and then output the operation check image Dpc as it is without synthesizing the NG feature image Cn for the next imaging data Dpx for which the good article determination or the defective article determination is made, and execute the operation check process in the operation check processing unit 54. The association between each article P and the imaging data Dpx can be made based on the arrival detection time point of each article P before and after, the imaging time point of the imaging data Dpx, or other identification information.

In the present embodiment, the product that is the target of the article P is not limited to a product having a uniform thickness and components, and is a product in which the magnitude of the brightness of the imaging data Dpx, which is an X-ray transmission image, varies depending on the location due to unevenness of the shape or variation of the components. Specifically, for example, the article P is a container or a bag of a predetermined shape in which a food prepared with a plurality of types of ingredients, which are contents, or a plurality of pieces of the same type of vegetables or fruits, which are contents, are packaged in a predetermined net amount or weight.

The plurality of locations having different image features in the imaging data Dpx of the article P are, for example, between a plurality of contents, near an edge of the content, a portion in which the brightness of the inspection image corresponding to the X-ray transmission amount of the content is relatively lower than the average brightness of the periphery, and a portion in which the brightness of the inspection image corresponding to the X-ray transmission amount of the content is relatively higher than the average brightness of the periphery. In the related art, the plurality of locations having different image features correspond to locations preferable for imaging as positions where a sample of the defective feature portion is disposed in a case where an operator adds a sample (test piece) of the defective feature portion to the product of the article P and performs operation check.

In the imaging data Dpx obtained by performing X-ray imaging on the article P of the present embodiment having the variation in brightness as described above, for example, in a case where a foreign matter is present, the brightness changes depending on the position even for the same foreign matter, and the detection sensitivity changes depending on the influence of the product brightness in the periphery. In such a case, in a case where the X-ray image is collected by manually attaching the foreign matter or the test piece equivalent to the foreign matter to the product to be the article P, in the packaged product, the product having a cavity inside, or the like, it may be difficult to know the position of the content from the appearance of the product, and it is often difficult to collect an image for operation check uniformly while changing locations attaching the foreign matter or the test piece.

Therefore, as illustrated in Fig. 2, in the operation check image Dpc of the present embodiment, a plurality of NG feature portions C1 and C2 positioned between a plurality of contents of the article P or near an edge, a plurality of NG feature portions C3 and C5 positioned in a portion of which the brightness of the inspection image corresponding to the X-ray transmission amount of the contents is relatively low with respect to the periphery, and a plurality of NG feature portions C4 and C6 positioned in a portion of which the brightness of the inspection image corresponding to the X-ray transmission amount of the contents is relatively high with respect to the periphery are synthesized as the NG feature images Cn with respect to the imaging data Dpx obtained by performing the X-ray imaging on each article P.

That is, in the present embodiment, in a case where the NG feature images Cn are synthesized with the imaging data Dpx obtained by performing X-ray imaging on each article P, the plurality of NG feature portions C1 to C6 are disposed without bias at a plurality of locations having different image features, such as a portion having high brightness and a portion having low brightness of the product to be the article P, between adjacent content in the product, and the vicinity of the edge of the content. Therefore, it is possible to create the operation check image Dpc, which is more effective for image determination, more quickly and accurately, and in real time, without performing a work such as collecting an image by attaching a foreign matter sample or a test piece instead of the foreign matter sample to the product of the article P as in the related art.

The operation check image Dpc can be relatively easily created, for example, as an image for AI learning or an image for sensitivity verification, by the operation check image generation unit 53 by setting a rule for the operation check image generation unit 53 to synthesize and dispose the plurality of NG feature portions C1 to C6 without bias at a plurality of locations having different image features with respect to the imaging data Dpx obtained by performing the X-ray imaging on the product serving as the article P.

In addition, in this case, the synthesized position of the plurality of NG feature portions C1 to C6 with respect to the article P is, for example, a part of a plurality of small image regions having predetermined sizes (the number of pixels) having image features different from each other, such as a portion having high brightness and a portion having low brightness of the product, the vicinity of the edge of the product, and between adjacent content in the product, and is extracted as a plurality of article image regions having image features suitable for image synthesis of the NG features with a search size of the number of pixels set in advance. On the other hand, the synthesis position of the plurality of NG feature portions C1 to C6 can be, for example, the central positions of the respective NG feature images.

The synthesis numbers and the synthesis positions of the NG feature portions C1 to C6 can be changed according to the number and the type of the plurality of small image regions having image features different from each other. However, at least one image synthesis position may be set in the plurality of small image regions having common image features and at least one image synthesis position may be set in the plurality of small image regions having image features different from each other.

Specifically, in order to synthesize the imaging data Dpx of the digital X-ray image obtained by performing the X-ray imaging on the product to be the article P of the currently set article type with the NG feature image Cn corresponding to the foreign matter stored in advance in the NG feature storage unit 52, the operation check control unit 50 substantially matches or effectively approximates the conditions of the X-ray imaging and the X-ray detection (hereinafter, referred to as X-ray detection conditions) in each of the imaging data Dpx and the NG feature image Cn corresponding to the foreign matter.

That is, the inspection image storage unit 51 stores the imaging data Dpx of the product to be the article P of the currently set article type in association with the X-ray detection condition thereof, for example, the stepwise set values of the tube voltage and the tube current of the X-ray tube 22 corresponding to the X-ray output (tube voltage × tube current) of the X-ray generator 21. On the other hand, the NG feature storage unit 52 generate a plurality of different X-ray detection conditions with respect to the same foreign matter sample, for example, the NG feature images Cn corresponding to a plurality of types of foreign matters having different step set values of the tube voltage and the tube current of the X-ray tube of the X-ray generator 21, and stores the generated NG feature images Cn in the NG feature storage unit 52 in association with the respective X-ray detection conditions. As a result, it is possible to match or effectively approximate the X-ray detection conditions of the imaging data Dpx of the article P in a case of selecting the NG feature images Cn.

In consideration of the difference between the X-ray detection condition of the imaging data Dpx of the article P and the X-ray detection condition of the NG feature image Cn of the test piece or the like stored in the NG feature storage unit 52, the NG feature image Cn may be subjected to a density conversion process to enable the NG feature image Cn to correspond to a large number of X-ray detection conditions such that the image density of the reference NG feature image Cn stored in the NG feature storage unit 52 is substantially the same as the image density in a case where the imaging is performed under the same condition as the X-ray detection condition of the imaging data Dpx of the article P. In any case, the difference in article type is directly reflected in the imaging data Dpx of the article P, while the NG feature image Cn is not affected by the article type.

In addition, the NG feature image Cn corresponding to the foreign matter can be stored in the NG feature storage unit 52 in advance (may be stored in a case of production), for example, as a foreign matter image of the test piece, before the start of the driving of the article inspection apparatus 1, and the user of the article inspection apparatus 1 can capture an image of a known foreign matter sample and detect X-rays with the inspection unit 20 to create the NG feature image Cn corresponding to the foreign matter sample. The NG feature storage unit 52 can take in the NG feature image Cn as the image data from an attachable and detachable recording medium, or can acquire the known NG feature image Cn from another article inspection apparatus or a management computer installed in the user company by data communication. The NG feature image Cn is not limited to an image corresponding to the foreign matter.

In a case of specifying the positions (the synthesis positions of the NG feature image Cn) of a plurality of locations having different image features in the imaging data Dpx obtained by performing X-ray imaging on the product to be the article P, it is possible to extract, as the feature amount, it is possible to extract the features of each portion, such as a portion having high brightness and a portion having low brightness in the image region of the product to be the article P, a portion near an edge of the product, and a portion between the contents of the product, using a set of the differences in brightness in the image as the feature amount, or to extract features by focusing on the distribution of the gradient direction of the brightness in the image, and it is also possible to perform the extraction using a mechanical method of automatically determining a process of converting the image into the feature amount by a computer.

Here, the X-ray transmission image of the article P can be obtained from a difference between values obtained by performing logarithmic conversion on the X-ray transmission amount detected in a state in which the article P is not present on the transport belt 11 and the X-ray transmission amount detected in a state in which the article P is present on the transport belt 11, as an image corresponding to the distribution of the X-ray absorption amount in the article P. In addition, the NG feature image Cn of the foreign matter sample or the like can also be obtained from the difference between the values obtained by performing the logarithmic conversion on the transmission amount of the X-rays detected in a state in which the article P or the foreign matter sample is not present on the transport belt 11 and the transmission amount of the X-rays detected in a state in which the foreign matter sample is present on the transport belt 11. The work procedure for acquiring the image can be made substantially the same as the procedure described, for example, in paragraphs 0036 to 0046 of JP-A-2009-168740.

For example, since the wavelength of the X-rays depends on the tube voltage of the X-ray generator 21 (voltage applied to the X-ray tube) and the X-ray irradiation amount depends on the tube current of the X-ray generator 21, the X-ray absorption amount decreases as the wavelength of the X-rays decreases (as the tube voltage increases). Further, the X-ray transmission image or the X-ray absorption image of the article P illustrates a two-dimensional distribution of an X-ray transmission amount through an object or a two-dimensional distribution of an X-ray absorption amount by the object. In a case where the X-ray irradiation amount is Io (intensity of X-rays), the X-ray transmission amount is I (intensity after transmission through the object), the X-ray absorbance is $\mu$, and a thickness of the object that is transmitted through the X-rays is d, an X-ray absorption amount T based on Lambert-Beer's attenuation law (I/Io = e^(-$\mu$d)) causes the following Expression to be established in a case where log is a natural logarithm.

$$T = (\log Io - \log I) = \mu d \quad \text{... Expression (1)}$$

In addition, in a case where a wavelength of X-rays is $\lambda$, a density of an article is $\rho$, an atomic number is Z, and a constant is C, the X-ray absorbance $\mu$ has a relationship of Expression (2).

$$\mu = \lambda^3 \rho Z C \quad \text{... Expression (2)}$$

Expression (1) indicates that the X-ray absorption amount is a difference between the X-ray irradiation amount Io and the X-ray transmission amount I, which are subjected to logarithmic conversion, and the X-ray irradiation amount Io is the X-ray transmission amount in a case where the X-ray absorption amount is zero. That is, the X-ray transmission amount detected in a state in which the inspection object as the object to be transported is not present on the transport belt is the X-ray irradiation amount Io. Therefore, as can be seen from Expressions (1) and (2), the degree of fluctuation in the X-ray absorption amount varies depending on the articles (the article P and the foreign matter) having different densities and atomic numbers by changing the wavelength of the X-rays, and in the article inspection apparatus 1, the X-ray output conditions (the tube voltage and the tube current of the X-rays) of the X-ray generator 21 can be set to make the difference between the article P and the foreign matter appear by using the fact.

Then, in a case where a foreign matter sample image (X-ray absorption image of the foreign matter) detected on the basis of a predetermined X-ray detection condition (tube voltage and tube current of X-rays) stored in the NG feature storage unit 52 is denoted by S1, and an X-ray absorption image of the article P acquired on the basis of the X-ray detection condition (tube voltage and tube current of X-rays) of the X-ray generator 21 set in correspondence with the article P is denoted by S2, the synthesis image S is represented by the following Expression (3).

$$S = \alpha S1 + S2 \quad \text{(where } \alpha \text{ is a conversion coefficient) ...}$$

Expression (3)

The conversion coefficient $\alpha$ of Expression (3) can be obtained in advance as a ratio of the density of the NG feature image Cn of the foreign matter sample detected based on the predetermined X-ray detection condition (the tube voltage and the tube current of the X-ray tube 22) stored in the NG feature storage unit 52 as a reference with respect to the density of the foreign matter sample image acquired for each X-ray detection condition (the tube voltage and the tube current of the X-ray) and stored in a conversion table for each X-ray detection condition (the tube voltage and the tube current of the X-ray).

The NG feature storage unit 52 stores X-ray images of a plurality of foreign matter samples having different sizes detected under a preset X-ray detection condition as a plurality of types of NG feature images Cn, for example, foreign matter images C1 to C6.

In addition, the NG feature storage unit 52 has storage means for storing the NG feature images Cn of the foreign matter sample for each type of foreign matter, that is, the shape (including the size) or the material (for example, metal, glass, or the like) in a case where the X-rays are emitted under the above-described X-ray detection condition. The NG feature image Cn consists of an X-ray absorption image in which an X-ray transmission amount in a case where a single foreign matter is irradiated with an X-ray under a predetermined X-ray detection condition is converted into an X-ray absorption amount, an X-ray absorption image in which an X-ray transmission amount in a case where foreign matters having the same material (for example, metal, glass, resin, bone, or the like) with different sizes and shapes (for example, cubes, spheres, lines, or the like) are irradiated with an X-ray under a predetermined X-ray detection condition while being disposed at predetermined intervals are converted into an X-ray absorption amount, and the like.

The control unit 30 includes the inspection processing unit 32 as a first control function unit that controls the operations of the image processing unit 33 to determine whether or not the quality state of the article P is good for each article P by controlling the operation of the determination unit 34 and the manipulation display unit 41, and in addition, includes the operation check control unit 50 as a second control function unit that controls the operations of the operation check image generation unit 53 and the operation check processing unit 54 to determine whether or not the operations of the image processing unit 33 and the determination unit 34 are normal while the inspection processing unit 32 exhibits the first control function.

The label of each image processing algorithm stored in the image processing algorithm setting unit 35 includes at least the number (identification number) of the image processing algorithm, but may include the name of the algorithm, the inspection target article type name indicating the content of the inspection with the algorithm, or the inspection item thereof.

In addition, the image processing algorithm setting unit 35 can include an algorithm storage unit that stores a plurality of image processing algorithms in advance, and an algorithm setting unit that is capable of executing an update setting process of updating the image processing algorithm set and stored in the image processing unit 33 to any of the image processing algorithms Pgm stored in the algorithm storage unit.

Next, operations will be described.

In the article inspection apparatus of the present embodiment configured as described above, before the start of the driving of the article inspection apparatus 1 or during the stop period of the article inspection, the work of storing the image of the existing test piece in advance in the NG feature storage unit 52 as the NG feature image Cn is performed by timely fetching the NG feature image Cn from the recording medium or acquiring the known NG feature image Cn from another article inspection apparatus, a management computer installed in the user company, or the like by data communication, with respect to the NG feature storage unit 52. An additional storage and preservation work of the NG feature image Cn in the NG feature storage unit 52 is possible.

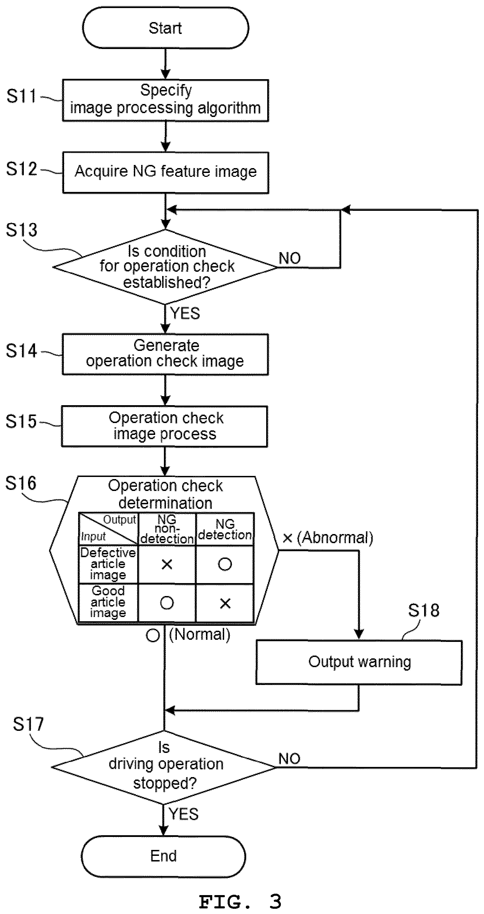

Next, in a case where the driving operation of the article inspection apparatus 1 for executing the article inspection of the article P is started, the article inspection of the article P that is sequentially put in a state where the inspection screen is displayed on the manipulation display unit 41 is executed, and the operation check processing as illustrated in Fig. 3 is usually executed as a background process in parallel with a process of the article inspection without being displayed on the screen.

As illustrated in Fig. 3, first, the image processing algorithm used in the driving operation of the article inspection apparatus 1 is specified by an algorithm number or the like corresponding to the current set article type (step S11).

Next, after grasping the X-ray detection condition (X-ray output (tube voltage $\times$ tube current) of the X-ray generator 21) in a case of imaging the imaging data Dpx of the article P taken in the inspection image storage unit 51, in order to synthesize any of the plurality of NG feature images Cn stored in the NG feature storage unit 52 with respect to the imaging data Dpx of the article P from the foreign matter image group for the plurality of kinds of foreign matter samples stored in the NG feature storage unit 52, any one of NG feature images Cn is extracted in which in the X-ray detection condition is substantially the same as or effectively approximated to the X-ray detection condition in a case of imaging the imaging data Dpx of the article P from among the among the plurality of NG feature images Cn in which the set value of the X-ray detection condition is different in a multi-stage manner, and the extracted NG feature image Cn is acquired as the NG feature image to be used for synthesis (step S12).

Next, the detection signal from the article detection sensor 28 is detected, and the imaging data Dpx of the article P is output from the inspection image acquisition unit 31 (or further, the article inspection corresponding to the predetermined number of inspections is completed or a predetermined time elapsed), and the inspection processing unit 32 determines whether or not the condition for the operation check of whether or not the inspection process is normal is established (Step S13).

In this case, in a case where the condition for the operation check is established (in step S13, YES), the operation check image generation unit 53 generates the operation check image Dpc by synthesizing the NG feature images Cn having the same X-ray detection condition as in the imaging, for example, as a plurality of foreign matter images C1 to C6 in a plurality of locations having image features different from each other in the image of the article P in Fig. 2 with respect to the imaging data Dpx of the article P taken in the inspection image storage unit 51 (step S14).

Next, the operation check processing unit 54 executes the same image process as the image processing unit 33 of the inspection processing unit 32 while using the image data of the operation check image Dpc in which the NG feature image Cn is synthesized with the predetermined image processing algorithm Pgm and the imaging data Dpx of each article P in parallel with the operations of the image processing unit 33 and the determination unit 34 of the inspection processing unit 32 during the driving operation of the article inspection apparatus 1 in which the image processing unit 33, the determination unit 34, and the manipulation display unit 41 are operated (step S15).

Next, based on the image processing result, a process of operation check determination of determining whether or not a processing result of NG detection can be reliably obtained by the same determination process as in the determination unit 34 is executed (step S16).

Then, here, in a case where the processing result is determined to be "NG detection" (in a case of "O" in step S16), whether or not the driving operation of the article inspection apparatus 1 is stopped is checked (step S17), and then the process of step S13 and subsequent steps is repeatedly executed until the driving operation of the article inspection apparatus 1 is stopped.

On the other hand, in a case where the processing result is determined to be "NG non-detection" (in a case of "×" in step S16), a warning is issued to warn that there is a possibility that some malfunction may occur in the manipulation during the article inspection while the inspection image of the article P is displayed on the manipulation display unit 41, or a warning is output to warn that it is necessary to perform manual operation check and the determination reference check by an operator in a case where "NG non-detection" is detected again during a certain inspection period (predetermined number of inspections) (step S18). Thereafter the operation stop confirmation in step S17 and/or the processing in step S13 and subsequent steps are repeatedly executed.

In the present embodiment, as described above, it is determined whether or not the inspection process in the inspection processing unit 32 is a normal operation for each predetermined operation check cycle, and the determination process is executed sequentially in real time or for each predetermined number of inspections.

Next, the actions will be described.

In the present embodiment, the operation check process of the operation check control unit 50 is executed in parallel with the operation of the image processing unit 33 of the inspection processing unit 32 during the driving operation of the article inspection apparatus 1, and whether or not the operations of the image processing unit 33 and the determination unit 34 are normal is determined by the operation check processing unit 54 of the operation check control unit 50 based on the imaging data Dpx, which is the inspection image during the driving operation.

In this case, the operation check image Dpc used in the operation check processing unit 54 is generated as a defective article image in which the defective feature portions C1 to C6 which are the NG feature images Cn are synthesized at a plurality of locations having different image features in the imaging data Dpx of the article P by the operation check image generation unit 53. Therefore, during the driving operation, it is checked whether or not the operation check image Dpc is determined to be defective by using the operation check image Dpc of the defective article image generated to include the defective feature portions C1 to C6 based on the imaging data Dpx (inspection image) of the product P that is exclusively a good article, and thus it is possible to determine whether or not the operations of the image processing unit 33 and the determination unit 34 of the inspection processing unit 32 are normal. As a result, it is possible to perform the operation check accurately and sequentially in real time or simultaneously for each predetermined number of inspections such as whether or not the detection signal from the inspection unit 20 is appropriate during the driving operation without causing the article inspection apparatus 1 to transition to the inspection stop state such as the operation check mode.

In addition, in the present embodiment, the operation check image generation unit 53 generates the operation check image Dpc by synthesizing the NG feature portions C1 to C6 (a plurality of partial images that are the defective feature portions) with a plurality of locations having different image features in the inspection image based on the imaging data Dpx during the driving operation of the article inspection apparatus 1. Therefore, the operation check image Dpc is less likely to be affected by the variation in the quality state of the article P or the bias in the X-ray transmission amount.

Further, in the present embodiment, the operation check image generation unit 53 generates the operation check image Dpc, which is the defective article image, by synthesizing the images of the plurality of NG feature portions C1 to C6 in which the quality state of the article P is determined to be the defective with respect to the imaging data Dpx (good article inspection image) in which the quality state of the article P is determined to be the good article by the determination unit 34 during the driving operation. Therefore, the operation check image Dpc of the defective article image in which the defective feature portion is synthesized based on the good article inspection image is generated during the normal driving operation, and the defective feature of the operation check image is stably secured, so that stable operation check can be performed. In addition, it is also possible to perform the operation check using the inspection image of the defective article in a case where the defective article is generated.

In addition, the present embodiment includes the control unit 30 having a first control function unit that controls the operations of the image processing unit 33, the determination unit 34, and the manipulation display unit 41 to determine whether the quality state of the article P is good or bad for each article P, and includes the operation check control unit 50 as a second control function unit that controls the operations of the operation check processing unit 54 and the operation check image generation unit 53 to determine whether or not the operations of the image processing unit 33 and the determination unit 34 are normal while the control unit 30 exhibits the first control function. Accordingly, the driving operation of controlling the operations of the image processing unit 33, the determination unit 34, and the manipulation display unit 41 by the inspection processing unit 32, which is the first control function unit, to determine whether or not the quality state of the product P is good, is performed in parallel with the operation check process of controlling the operation check image generation unit 53 and the operation check processing unit 54 by the operation check control unit 50, which is the second control function unit, to determine whether or not the operations of the image processing unit 33 and the determination unit 34, which are responsible for the inspection, are normal, so that, here, the control unit 30 can be executed in the background which is hidden from the display screen during the driving operation. In a case where the operation check result is abnormal, it is possible to perform a notification output such as a warning display or a warning sound.

In addition, in the present embodiment, since the inspection image based on the imaging data Dpx is an X-ray transmission image obtained by imaging the article P with the X-ray, the operation check image generation unit 53 can easily create the operation check image Dpc of the defective article image by performing image synthesis of the plurality of NG feature portions C1 to C6 as the NG feature images Cn with respect to each inspection image which is the imaging data Dpx of each article P during the driving operation.

As described above, in the present embodiment, it is possible to provide the article inspection apparatus 1 that can perform the operation check such as whether or not the detection signal from the detection unit is appropriate during the driving operation without transitioning to the inspection stop state such as the operation check mode.

As described above, the operation check processing unit 54 in the present embodiment may execute, in parallel, the operation check determination as to whether or not the inspection image of the product P, which is determined as a good article by the determination unit 34, is determined as a good article and the operation check determination as to whether or not the operation check image Dpc of the defective article image is determined to be a defective article, using the predetermined image processing algorithm in the same manner as the determination unit 34 during the driving operation of the article inspection apparatus 1. In addition, the operation check processing unit 54 may generate the operation check image Dpc of the defective article image for a predetermined number of the inspection images among inspection images of the plurality of articles P and perform the operation check process of determining whether or not the NG non-detection using the operation check image Dpc corresponding to the good article without generating the operation check image of the defective article image for the remaining inspection images.

In the embodiment illustrated in Figs. 1 to 3, the operation check control unit 50 is built in the control unit 30, but the operation check control unit 50 may be provided as a control device or a management device independent of the control unit 30. Other embodiments will be described below.

(Other Embodiments)

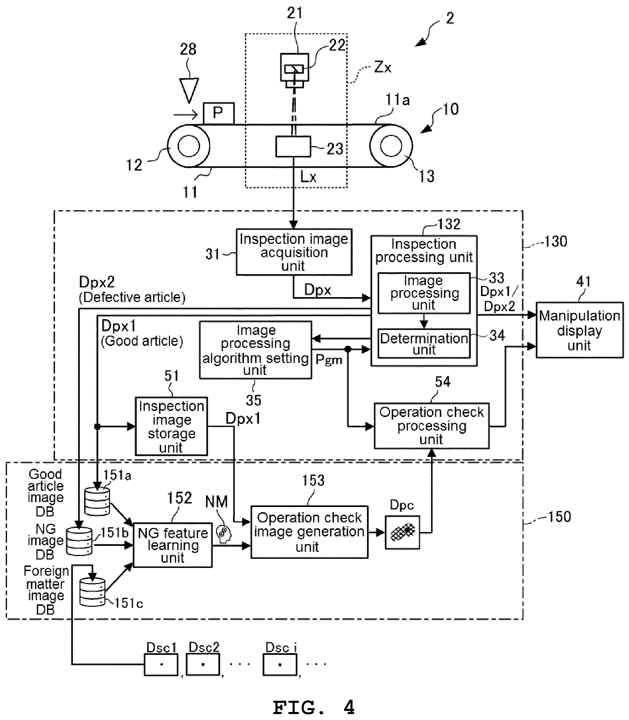

Fig. 4 illustrates an article inspection apparatus according to another embodiment of the present invention.

In Fig. 4, the same configurations as the configurations of the one embodiment illustrated in Fig. 1 are represented by the same reference numerals, and the detailed description thereof will be omitted.

As illustrated in Fig. 4, the article inspection apparatus 2 of the present embodiment includes a transport unit 10 and an inspection unit 20 configured in the same manner as in the one embodiment, and an inspection control unit 130 and an operation check control unit 150 that are configured to be independent of each other and in a data communicable manner in order to exhibit the similar functions as the control unit 30 of the one embodiment.

The inspection control unit 130 has a hardware configuration similar to the control unit 30 of the one embodiment, and has, as a plurality of functional units, an inspection image acquisition unit 31 that sequentially takes in the detection data Lx of the line scanning image for each predetermined period from the X-ray detector 23, and acquires and outputs the imaging data Dpx corresponding to the dose distribution of the X-rays transmitted through the article P, an inspection processing unit 132 that executes a predetermined inspection based on the imaging data Dpx, and outputs the imaging data for each inspection result obtained by adding the detection result of each article P to the imaging data Dpx, which is the inspection image of each article P, as attribute information, to the manipulation display unit 41 and the operation check control unit 150 as the imaging data Dpx1 of a good article or the imaging data Dpx2 of a defective article, an image processing algorithm setting unit 35 that sets the image processing algorithm used in the inspection processing unit 132 in a variable manner according to the selected article type of the article P, an inspection image storage unit 51 that stores a good article image in the same hardware configuration as in the control unit of the embodiment, and an operation check processing unit 54 that, in the same hardware configuration as in the control unit of the embodiment, takes in the specific image processing algorithm Pgm from the image processing algorithm setting unit 35 in parallel with a case where the inspection processing unit 32 is switched into the specific image processing algorithm Pgm according to the set article type by the image processing algorithm setting unit 35.

The operation check control unit 150 has a good article image database 151a that accumulates and stores the imaging data Dpx1 of the good article among the imaging data for each inspection result from the inspection processing unit 132, a NG image database 151b that accumulates and stores the imaging data Dpx2 of the defective article among the imaging data for each inspection result, and a foreign matter image database 151c that takes in, accumulates, and stores foreign matter images Dsc1, Dsc2, and Dsci, which are NG feature images, in a form of download or the like via a recording medium or a network. In Fig. 4, the database is denoted by DB.

The operation check control unit 150 further includes an NG feature learning unit 152 that learns an NG feature, for example, a feature of the foreign matter image, which is suitable for synthesizing the good article image with the respective image data by fetching the image data from the good article image database 151a, the NG image database 151b, and the foreign matter image database 151c, and creates an NG feature image generation model NM, and an operation check image generation unit 153 that creates and outputs an operation check image Dpc similar to an operation check image Dpc created by the operation check image generation unit 53 of the one embodiment using the good article image Dpx1 from the inspection image storage unit 51 of the inspection control unit 130 and the NG feature image generation model NM from the NG feature learning unit 152.

Here, the NG feature image generation model NM generated by the NG feature learning unit 152 is, for example, a model in which the NG feature is learned by two (generation and identification) neural networks constituting a Generative Adversarial Network (GAN), or a model in which the NG feature is learned by a distributed model that performs a division process on a task to be learned using two nodes (each of which is equipped with a GPU) on a network. By using the NG feature image generation model NM, it is possible to provide a function of generating a new NG feature image Cn that is not present in the foreign matter image DB and the NG image DB, which is synthesized with the good article image Dpx1 from the inspection image storage unit 51, with respect to the operation check image generation unit 153. In a case where the AI that synthesizes the defect in the good article image cannot output a realistic image even in a case where the performance is maximized in a learning phase, the operation check may be performed with the actually imaged defective article image.

Even in the present embodiment, the operation check process of the operation check control unit 150 is executed in parallel with the operation of the image processing unit 33 of the inspection processing unit 132 during the driving operation of the article inspection apparatus 2, and whether or not the operation of the image processing unit 33 and the determination unit 34 of the inspection processing unit 132 is normal is determined by the operation check processing unit 54 of the operation check control unit 150 and the inspection control unit 130 based on the imaging data Dpx which is the inspection image during the driving operation.

In this case, the operation check image Dpc is generated as a defective article image in which the NG feature images Cn, for example, the defective feature portions C1 to C6 illustrated in Fig. 2 are synthesized at a plurality of locations having different image features in the imaging data Dpx of the article P, by the operation check image generation unit 153. Therefore, by using the operation check image Dpc of the NG image generated based on the imaging data Dpx (inspection image) of the good article P, it is possible to accurately determine whether or not the operations of the image processing unit 33 and the determination unit 34 of the inspection processing unit 132 are normal by checking whether or not the operation check image Dpc is determined to be defective. As a result, as in the case of the one embodiment, it is possible to perform the operation check accurately and sequentially in real time or simultaneously for each predetermined number of inspections such as whether or not the detection signal from the inspection unit 20 is appropriate during the driving operation without causing the article inspection apparatus 1 to transition to the inspection stop state such as the operation check mode. In addition, the operation check image Dpc is less likely to be affected by the variation in the quality state of the article P or the bias in the X-ray transmission amount.

In each of the above-described embodiments, the operation check image is created by synthesizing the NG feature image with the latest good article image, and the operation check is performed to check whether or not the NG detection function of the article inspection apparatus 1 is normal. However, in a case where the inspection result is a good article, the good article image may be stored, and the operation check image may be created from various stored good article image or the latest good article image at a predetermined timing to perform the operation check. In addition, the defective portion of the defective article image may be added to the NG feature storage unit and may be used for NG synthesis. In a case where the defective article image in this case is the image of the product with the foreign matter, it is preferable to provide a foreign matter positional information creation unit to add the foreign matter image and the positional information thereof to the NG feature storage unit. Further, although there is a concern about redundancy of the process, it is also conceivable to execute the operation check process by synthesizing the NG feature images regardless of the good article image or the defective article image, and to determine a defective operation by comparing the inspection result with the operation check result.

As described above, the article inspection apparatus according to the embodiment of the present invention can provide an article inspection apparatus that reduces the downtime for transitioning to the inspection stop state for the operation check and can perform the operation check in parallel during the driving operation for performing the article inspection. The present invention is useful for an article inspection apparatus in general that inspects the quality state of an inspection article by applying a predetermined image processing algorithm with respect to an inspection image obtained by imaging the inspection article of a predetermined article type.

[Description of Reference Numerals and Signs]

1, 2: article inspection apparatus
10: transport unit
11: transport belt
11a: upper running section
12, 13: transport roller
20: inspection unit
21: X-ray generator
22: X-ray tube
23: X-ray detector
28: article detection sensor
30: control unit
31: inspection image acquisition unit
32: inspection processing unit (inspection control unit)
33: image processing unit
34: determination unit
35: image processing algorithm setting unit
41: manipulation display unit (display unit)
50: operation check control unit (second control function unit)
51: inspection image storage unit (good article image storage unit)
52: NG feature storage unit (feature storage unit for foreign matter and other defective portions)
53: operation check image generation unit
54: operation check processing unit
130: inspection control unit
132: inspection processing unit
150: operation check control unit
151a: good article image database (good article image DB)
151b: NG image database (NG image DB)
151c: foreign matter image database (foreign matter image DB)
152: NG feature learning unit
153: operation check image generation unit
C1, C2, C3, C4, C5, C6: NG feature portion (plurality of partial images that are defective feature portions)
Cn: NG feature image (foreign matter image)
Dsc1, Dsc2, Dsci: foreign matter image (NG feature image)
Dpc: operation check image
Dpx: imaging data (inspection image, X-ray transmission image, data of X-ray imaging image)
Dpx1: imaging data (good article imaging data, inspection image, good article image)
Dpx2: imaging data (defective article imaging data, inspection image, defective article image)
Lx: detection data
NM: NG feature image generation model
P: article (Inspection article)
Pgm: specific image processing algorithm

**Claims**

1. An article inspection apparatus comprising:

an image processing unit (33) that performs an image process using a predetermined image processing algorithm on an inspection image (Dpx) obtained by imaging an article (P) to be transported by imaging means (20) and outputs determination data for a quality state of the article;

a determination unit (34) that determines whether the quality state of the article is good or bad based on the determination data;

a display unit (41) that displays a result determined by the determination unit;

an operation check image generation unit (53) that generates a defective article image including a defective feature portion of which the quality state of the article is determined to be defective as an operation check image based on the inspection image during a driving operation in which the image processing unit, the determination unit, and the display unit are operated; and

an operation check processing unit (54) that executes an operation check process using the predetermined image processing algorithm on the operation check image in parallel with an operation of the image processing unit during the driving operation, and determines whether or not the operations of the image processing unit and the determination unit are normal.

2. The article inspection apparatus according to Claim 1,
wherein the operation check image generation unit generates the operation check image by synthesizing a plurality of partial images that are the defective feature portions with a plurality of locations having different image features in the inspection image during the driving operation.

3. The article inspection apparatus according to Claim 2,
wherein the operation check image generation unit generates the defective article image by synthesizing images of the plurality of defective feature portions in which the quality state of the article is determined to be defective with respect to a good article inspection image in which the quality state of the article is determined to be a good article by the determination unit during the driving operation.

4. The article inspection apparatus according to Claim 2, further comprising:

a control unit (30) that has a first control function unit which controls operations of the image processing unit, the determination unit, and the display unit to determine whether a quality state of each article is good or bad,
wherein the control unit has a second control function unit (50) that controls the operations of the operation check processing unit and the operation check image generation unit to determine whether the operations of the image processing unit and the determination unit are normal while the first control function is exhibited.

5. The article inspection apparatus according to Claim 2,
wherein the inspection image is an X-ray transmission image (Dpx) obtained by imaging the article with X-rays.

6. The article inspection apparatus according to Claim 1,
wherein the operation check image generation unit generates the defective article image by synthesizing images of the plurality of defective feature portions in which the quality state of the article is determined to be defective with respect to a good article inspection image in which the quality state of the article is determined to be a good article by the determination unit during the driving operation.

7. The article inspection apparatus according to Claim 1, further comprising:

a control unit (30) that has a first control function unit which controls operations of the image processing unit, the determination unit, and the display unit to determine whether a quality state of each article is good or bad,
wherein the control unit has a second control function unit (50) that controls the operations of the operation check processing unit and the operation check image generation unit to determine whether the operations of the image processing unit and the determination unit are normal while the first control function is exhibited.

8. The article inspection apparatus according to Claim 1,
wherein the inspection image is an X-ray transmission image (Dpx) obtained by imaging the article with X-rays.

FIG. 1

FIG. 2

FIG. 3

FIG. 4

## EP 4 700 697 A1

Europäisches
Patentamt
European
Patent Office
Office européen
des brevets

# EUROPEAN SEARCH REPORT

**Application Number**

EP 25 19 5242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 289780 B2 (ANRITSU SANKI SYS CO LTD) 11 September 2013 (2013-09-11) * paragraphs [0001] - [0007] * * paragraphs [0017] - [0019] * * paragraphs [0023], [0028], [0029] * * paragraphs [0048], [0049], [0051] * * paragraphs [0059] - [0066] * * paragraphs [0097], [0099] * * figures 1,2,5-9,12 * | 1-8 | INV. G06T7/00 |
| A | JP 2013 113784 A (ANRITSU SANKI SYS CO LTD) 10 June 2013 (2013-06-10) * the whole document * | 1-8 | |
| A | CN 112 255 251 A (ISHIDA SEISAKUSHO) 22 January 2021 (2021-01-22) * the whole document * | 1-8 | |
| A | CN 116 559 205 A (ANRITSU CORP) 8 August 2023 (2023-08-08) * the whole document * | 1-8 | TECHNICAL FIELDS SEARCHED (IPC) G06T |

The present search report has been drawn up for all claims

| Place of search | Date of completion of the search | Examiner |
|---|---|---|
| Munich | 27 November 2025 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5242

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2025

| Patent document cited in search report | | Publication date | Patent family member(s) | | Publication date |
|---|---|---|---|---|---|
| JP 5289780 | B2 | 11-09-2013 | JP | 5289780 B2 | 11-09-2013 |
| | | | JP | 2009168740 A | 30-07-2009 |
| JP 2013113784 | A | 10-06-2013 | JP | 5906070 B2 | 20-04-2016 |
| | | | JP | 2013113784 A | 10-06-2013 |
| CN 112255251 | A | 22-01-2021 | CN | 112255251 A | 22-01-2021 |
| | | | EP | 3764088 A2 | 13-01-2021 |
| | | | JP | 2021012098 A | 04-02-2021 |
| | | | KR | 20210004858 A | 13-01-2021 |
| | | | US | 2021004951 A1 | 07-01-2021 |
| CN 116559205 | A | 08-08-2023 | CN | 116559205 A | 08-08-2023 |
| | | | JP | 7642576 B2 | 10-03-2025 |
| | | | JP | 2023114828 A | 18-08-2023 |
| | | | US | 2023252620 A1 | 10-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009031149 A
- JP 2013113784 A

- JP 2009168740 A